(19)

Europäisches
Patentamt
European
Patent Office
Office européen
des brevets

(11) **EP 2 144 170 A2**

(12) **EUROPEAN PATENT APPLICATION**

(43) Date of publication:
    **13.01.2010 Bulletin 2010/02**

(51) Int Cl.:
    **G06F 17/12** *(2006.01)*

(21) Application number: **09165316.2**

(22) Date of filing: **13.07.2009**

(84) Designated Contracting States:
    **AT BE BG CH CY CZ DE DK EE ES FI FR GB GR
    HR HU IE IS IT LI LT LU LV MC MK MT NL NO PL
    PT RO SE SI SK SM TR**

(30) Priority: **11.07.2008 US 218052
            29.04.2009 US 453078
            29.04.2009 US 453092**

(71) Applicant: **Vannucci, James
    McDonald PA 15057 (US)**

(72) Inventor: **Vannucci, James
    McDonald, Pennsylvania PA15057 (US)**

(74) Representative: **Lang, Johannes
    Patent- und Rechtsanwälte
    Bardehle Pagenberg Dost Altenburg Geissler
    Galileiplatz 1
    81679 München (DE)**

(54)    **A device and method for calculating a desired signal**

(57)    A device for calculating a desired signal solves
a system of equations with a coefficient matrix comprising
a Toeplitz structure by separating the coefficient matrix
into a sum of matrix products comprising diagonal matrices. The sum of matrix products is used to form a system
of equations with a transformed narrow-banded coefficient matrix. The solution of this set of equations is used
to generate the desired signal.

T0 Y0

131 → MATRIX
SEPARATOR

Ct Y

132 → SYSTEM
SOLVER

Xa

133 → EXPANDER

X

134 → SYSTEM
PROCESSOR ← J0

J

**Fig. 2   Solver 130**

**Description**

**Cross-Reference to Related Applications**

This application claims Foreign Priority to application US 12/218,052, filed 11 July 2008, the entire contents of which are incorporated herein by reference.

**Background**

The present invention relates to the field of signal processing. In particular, the present invention concerns devices and methods for calculating a desired signal. Non-limiting examples of these devices include communications devices, sensing devices, imaging devices, digital filtering devices, control devices and general signal processing devices including imaging processing devices, speech processing devices, system identification devices, and linear prediction devices.

Communications devices typically input, process and output signals that represent transmitted data, speech or images. The devices usually use digital forms of these signals to generate a covariance matrix, and a known vector, in a system of equations that must be solved for the operation of the device. The covariance matrix may be Toeplitz or block Toeplitz. The solution to this system of equations is a weight vector that is usually applied to known signals to form the output signals of the device. Usually, the faster the system of equations can be solved, the higher the capacity of the device. Also, the larger the dimensions of the system of equations, the more past information is available to form the desired signals. Non- limiting examples of communications devices including echo cancellers, equalizers, and devices for channel estimation, carrier frequency correction, speech encoding, mitigating intersymbol interference, and user detection as disclosed in Oh et al. (US 6,137,881), Kim et al. (US 2005/0123075), Tsutsui (US 2005/0254564), Dowling (US 2004/0095994), and Schmidt (US 5,440,228).

Sensing devices typically collect an input signal with an array of sensors, and convert this signal to a digital signal that represents some type of physical target, or physical object of interest. The digital signals are usually used to generate a covariance matrix, and a known vector in a system of equations that must be solved for the operation of the device. The covariance matrix may be Toeplitz, or block Toeplitz. The solution to this system of equations is a weight vector that can be used with known signals to calculate desired signals that form a beam pattern. The weight vector can also contain physical information on the object of interest. The dimensions of the system of equations can determine the resolution of the device. The speed with which the system of equations can be solved improves tracking of the target, and determining the position of the target in real time. Non-limiting examples of sensing devices include radar, ladar, and sonar devices as disclosed in Zrnic (US 6,448,923), Davis (US 6,091,361), Pillai (US 2006/0114148), Yu (US 6,567,034), Vasilis (US 6,044,336), Garren (US 6,646,593), Dzakula (US 6,438,204), Sitton et al. (US 6,038,197) and Davis et al. (US 2006/0020401).

Imaging devices typically collect signals from an array of sensors, digitize the signals, and use the digitized signals to form a system of equations with a covariance matrix and a known vector. The system of equations must be solved for the operation of the device. The solution is a digital signal in the form of a vector that represents an image including bones, skin, tissue, or structural data of an object. The covariance matrix can be block Toeplitz. The performance of the imaging device is usually related to the maximum dimensions of the system of equations, since this usually determines the resolution of the device. Device performance is also improved by increasing the speed at which the system of equations can be solved. Non-limiting examples of imaging devices include synthetic aperture radar, fault inspection devices, geological imaging devices, magnetic resonance imaging devices (MRI), computer tomography (CT), positron emission tomography (PET), synthetic aperture radar, and ultrasound devices as disclosed in Johnson et al. (US 6,005,916), Chang et al. (US 2008/0107319), Zakhor et al. (US 4,982,162) and Liu (US 6,043,652).

Control devices typically process signals that represent a wide range of physical quantities including deformation, position, and velocity, of a controlled object. The signals are usually digitized, and used to generate a covariance matrix and a known vector in a system of equations that must be solved for the operation of the device. The covariance matrix may be a Toeplitz, or block Toeplitz matrix. The solution to this system of equations is a signal weight vector that can be used to generate signals that control a mechanical, biological, chemical, or electrical, component. The performance of the device is usually directly related to the maximum dimensions of the system of equations, and the speed at which the system of equations can be solved. A non-limiting example of a device that controls noise and vibration is disclosed in Preuss (US 6,487,524),

Filtering devices typically process signals that represent a wide range of physical quantities including speech, images, and data, The signals are usually digitized, and used to generate a covariance matrix and a known vector in a system of equations that must be solved for the operation of the device. The covariance matrix may be a Toeplitz, or block Toeplitz matrix. The solution to this system of equations is a signal weight vector that can be used to filter known signals into desired signals. The performance of the device is usually directly related to the maximum dimensions of the system of equations, and the speed at which the system of equations can be solved.

General signal processing devices include linear prediction, signal compression, and signal estimation devices, system, pattern and signal identification devices, speech processing devices, image processing devices, artificial neural network devices, and network routing devices. The input signals for these devices are usually digitized, and used to generate a covariance matrix and a known vector in a system of equations that must be solved for the operation of the device. The covariance matrix may be Toeplitz, or block Toeplitz matrix. The solution to this system of equations is a vector that can be used to determine desired signals, or that can itself be a digital signal representing an unknown system, a signal, a frame of speech, an image or compressed data. The performance of the device is usually directly related to the maximum dimensions of the system of equations, and the speed a t which the system of equations can be solved.

Toeplitz matrices have constant entries along their diagonal elements. A device may require the solution of a system of equations with an approximately Toeplitz or approximately block Toeplitz matrix. In many of these devices, a Toeplitz matrix may be substituted for an approximately Toeplitz matrix without a significant effect on the solution. Replacing all the elements along a diagonal of an approximately Toeplitz matrix with the average of the elements along that diagonal results in a good approximate solution for many problems. Jansson et al. (US 5,153,926) and Ding (US 2006/0039458 A1). Barnard (US 6,545,639) discloses replacing a covariance matrix in a radar/sonar sensor array system with a Toeplitz matrix whose elements along a diagonal are the least-squares approximation of the elements along a diagonal of the covariance matrix. Hui (US 2005/0276356) discloses iteratively calculating the inverse of an approximate Toeplitz matrix from the inverse of a Toeplitz matrix.

Many methods exist for solving a system of equations with a Toeplitz or block Toeplitz coefficient matrix. These methods are extensively documented in the prior art, so they will only be very briefly summarized here. These methods can generally be classified as being either direct or iterative methods, with the direct methods being further classified as classical, fast or super fast, depending on the number of steps required for a solution of the system of equations.

The most popular iterative methods include methods from the conjugate gradient family of methods. These iterative methods can be used with either block Toeplitz or Toeplitz coefficient matrices. Classical methods require $O(n^3)$ flops and include Gauss elimination and decomposition methods including eigenvalue, singular-value, LDU, QR, and Cholesky decomposition. The classical methods can be used with either Toeplitz or block Toeplitz coefficient matrices. The classical methods do not exploit the displacement structure of the matrices. Fast methods exploit the displacement structure of matrices and require $O(n^2)$ flops. They are primarily used with Toeplitz coefficient matrices. Examples of fast methods include the Levinson type methods, and the Schur type methods. Super-fast methods are relatively new, and require $O(n \log^2 n)$ flops. Iterative methods can be stable, but can also be slow to converge for some systems. The classical methods are stable, but are slow. The fast methods are stable, and can be faster than the iterative methods. The super-fast methods have not been shown to be stable, and many are only asymptotically super-fast.

In general, for communications, imaging, filtering, sensing, control, and general signal processing devices, the prior art methods are slow, and are limited in their application to systems of equations that do not have large dimensions. These limitations adversely affect the following processing characteristics: the capacity of the device, the device's ability to process signals in real time, and the amount of information that can be extracted from known signals. In addition, for sensing and imaging devices, the prior art methods also have difficulty solving systems of equations with very ill-conditioned coefficient matrices. The resolution of these devices is also limited by the inability of the prior art methods to solve systems of equations with large dimensions. As such, there is a need for a device and method for calculating a desired signal with improved efficiency for systems of equations with larger dimensions.

The disclosed invention solves these, and other, problems. The disclosed invention calculates a desired signal significantly faster, and for systems of equations with larger dimensions than prior art methods. The following comparisons are with respect to the fastest fast methods. For devices solving systems of equations with Toeplitz coefficient matrices, the disclosed methods require approximately 30% fewer calculations when implemented on a sequentially processing architectures. The disclosed methods can be easily implemented on very simple parallel processing hardware architectures with a large speedup since the vast majority of the calculations can be performed with the same instruction simultaneously processing different data streams. For large Toeplitz correlation matrices (>1024), sequential implementation of the disclosed methods is extremely efficient, having a complexity $O(N \ln N)$.

For block Toeplitz matrices, the disclosed methods are extremely efficient. The solution to a system of equations can be obtained in $O(N^2 \ln^2 N)$ flops. For many current imaging and sensing devices, the disclosed methods are approximately two orders of magnitude more efficient than the most efficient classical prior art methods. On simple parallel processing hardware architectures, the speedup is well over two orders of magnitude for many current imaging and sensing devices. The disclosed methods alter the coefficient matrix. These alterations can be selected to significantly improve the condition number of the coefficient matrix. Imaging and sensing devices process very ill-conditioned block Toeplitz coefficient matrices with condition numbers $O(10^{12})$. The disclosed methods substantially reduce this condition number so that an accurate solution is very efficiently obtained. The disclosed methods can be used in place of singular-value decomposition for very ill-conditioned coefficient matrices.

Devices implementing the disclosed methods also solve larger systems of equations than those devices implementing prior art methods. For communications, control, filtering and general signal processing devices, the disclosed methods produce: a solution vector that contains more information, improved device capacity and real time operation, lower power consumption, and lower heat dissipation. Additionally, for sensing and imaging devices, regularization of the coefficient matrix is usually not required by the disclosed methods, and resolution can also be greatly increased.

**Brief Summary**

Many devices require the calculation of desired signals J for their operation. The desired signals J are either the solution $X_0$ to a system of equations, or the result of using the solution $X_0$ to process a given signals $J_0$. The solution $X_0$ is obtained by solving a system of equations with a coefficient matrix To that is either Toeplitz or block Toeplitz. An approximation to the solution $X_0$ can be obtained by using the Toeplitz structure of the coefficient matrix $T_0$ to form a transformed system of equations with a banded coefficient matrix $T_{tapp}$. The transformed system of equations is solved for a solution X. The solution X is used to determine the desired signals J.

The matrix To can be separated into a sum of products comprising matrices $C_i$ and diagonal matrices $D_{ri}$. The matrices $C_i$ are used to form the banded coefficient matrix $T_{tapp}$. The outer rows and columns of the matrix $T_0$ can be altered with modified rows and columns. The matrix To can be extended to a larger dimension to obtain improved solution characteristics for the transformed system of equations.

**Brief Description of the Drawings**

The foregoing and other objects, features and advantages of the inventions, as well as the invention itself, will be more fully understood from the following illustrative description, when read together with the accompagnying drawings:

FIG. 1 shows a signal processing device.

FIG. 2 shows the disclosed invention.

FIGs. 3(a) and 3(b) show the disclosed coefficient matrices, and systems of equations.

FIGs. 4(a), 4(b) and 4(c) show forms of disclosed vectors, and systems of equations.

**Detailed Description**

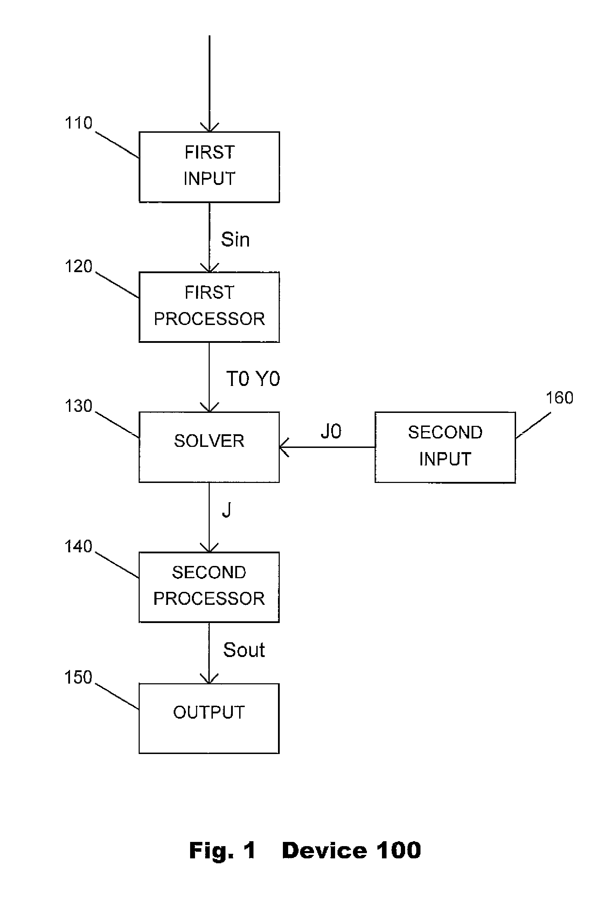

Fig. 1 shows a non-limiting example of a signal processing device 100 that includes a solver 130 that calculates desired signals J. The device 100 can be a communications, sensing, imaging, digital filtering, control, and general signal processing device. General signal processing devices include image processing devices, speech processing devices, pattern, signal and system identification devices, signal estimation devices, linear prediction devices, and artificial neural network devices.

A first input 110 is the source for at least one signal Sin to be processed by a first processor 120 to form a system of equations with a Toeplitz, or block Toeplitz, coefficient matrix $T_0$ , and a vector $Y_0$. This system of equations is solved by the solver 130 to obtain a vector X. The solver 130 receives signals $J_0$ from a second input 160, and processes the signals $J_0$ with the vector X to obtain the desired signals J. The signals $J_0$ may be processed before they are received by the solver 130. The signals $J_0$ may be signals from the first input 110 or the first processor 120. The desired signals J from the solver 130 are processed by a second processor 140 to form signals Sout sent to the output 150. Not all devices require the signals J be calculated from signals $J_0$. For these devices, the elements of the vector X are a desired digital signal, and are the output of the solver 130. In this case, the signals J include the vector X. Some devices may require the solver 130 to output both the vector X and the signals J. For these devices, the output is the signals J, and the signals J include the elements from the vector X. Many devices do not include all of the components of Fig. 1. For most devices, each component includes many sub-components. The device 100 may also include additional components. The device may include feedback from the output 150, or the second processor 140, to another component such as the first processor 120 or solver 130.

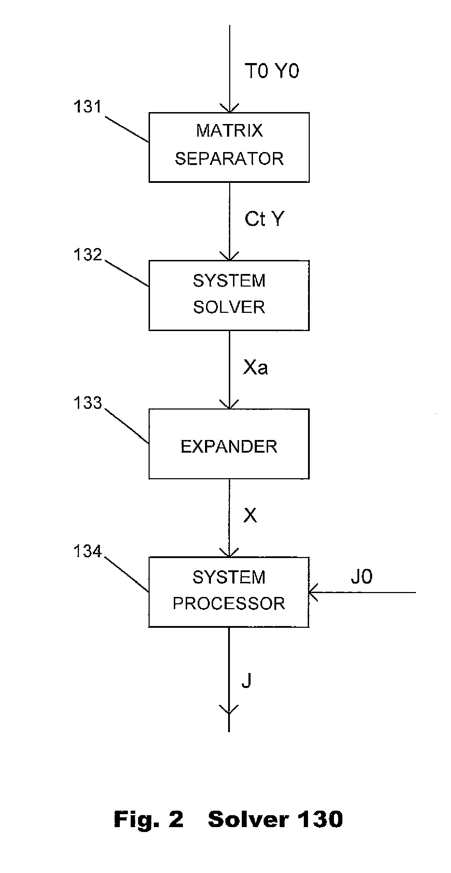

Fig. 2 discloses a solver 130 that calculates desired signals J from a vector X that is the solution of a system of equations with a coefficient matrix that comprises a Toeplitz structure. Matrices that comprise a Toeplitz structure are approximately Toeplitz matrices, matrices that can be rearranged to a Toeplitz or an approximately Toeplitz form, matrices that can be efficiently transformed to a Toeplitz or approximately Toeplitz form, or matrices that contain any of these forms as submatrices. Approximately Toeplitz matrices have diagonals with elements that are approximately equal.

As a non-limiting example, the device 100 can be a MRI device. The first input 110 can include a scanning system with an MRI scanner that generates input signals Sin. The first processor 120 converts RF signals to k-space data, then forms a system of equations with a coefficient matrix To and a known vector $Y_0$. The matrix To can be a Fourier operator that maps image space data to k-space data. The vector $Y_0$ is the measured k-space data. The solver 130 transforms k-space data into image space data by solving the system of equations with coefficient matrix To and known vector $Y_0$. The vector X is the solution to the system of equations and represents image space data. Signals J comprise the vector X. The second processor 140 maps image space data into optical data then transforms the optical data into signals Sout for a display 150.

As a non-limiting example, the device 100 can be an ultrasound device. The first input 110 comprises acoustic receivers that generate input signals Sin. The first processor 120 can comprise an amplifier, phase detector and analog-to-digital converters. The first processor 120 forms a system of equations with a coefficient matrix $T_0$ and known vector $Y_0$. The vector $Y_0$ is calculated from the input signals. The matrix $T_0$ is formed from either the input signals, or a Greene's function. The solver 130 calculates a vector X that can represent the conductivity, and dielectric constant of a target object. Signals J comprise the vector X. The second processor 140 can comprise a transmit multiplexer, scan devices, oscillator, and amplifier. The second processor 140 processes the vector X into a signal Sout that is compatible with the output 150 which can comprise acoustic transmitters, displays, printers and storage.

As a non-limiting example, the device 100 can be an array antenna system. The input signal Sin is generated by an antenna array 110. The first processor 120 can comprise down-converters, demodulators, and channel selectors. The first processor 120 calculates a system of equations from steering vectors $Y_0$, and a covariance matrix $T_0$ formed from antenna aperture signals that can represent transmitted information. The solver 130 calculates signal weights X, and multiplies signals $J_0$ for associated antenna elements by the signal weights X to obtain signals J. The signals J can represent transmitted information. A third processor 140 performs further processing on the signals J. The output 150 can include an antenna array, transducer or display.

As a non-limiting example, the device 100 can be a communications device. Communications devices include echo cancellers, equalizers, and devices for channel estimation, carrier frequency correction, speech encoding, mitigating intersymbol interference, and user detection. For these devices, the first input 110 includes hardwire connections, or an antenna array. The first processor 120 can include an amplifier, a detector, receiver, demodulator, digital filters, a sampler. The first processor 120 forms the coefficient matrix $T_0$ from a covariance matrix generated from the input transmitted signals Sin. The covariance matrix can be Toeplitz or block Toeplitz. The vector $Y_0$ is usually a cross-correlation vector between transmitted signals Sin. The matrix To and the vector $Y_0$ usually represent transmitted speech, images or data. The solver 130 solves the system of equations for the signal weights X, and combines the signal weights X with signals $J_0$ from the second input 160 to form desired signals J. The second processor 140 further processes the signals J for the output 150, which can include a hardwire connection, transducer, or display output. The signals from the second input 160 can be the signals Sin from the first input 110.

As a non-limiting example, the device 100 can be a device that controls mechanical, chemical, biological, and electrical components. The matrix To and the vector $Y_0$ are calculated by the first processor 120 from signals Sin collected by sensors 110. The first processor 120 can include a filter and a sampler. The solver 130 calculates a vector X that can be used to generate a control signal J sent to an actuator or transducer 150 after additional processing by the second processor 140. The signals Sin can include performance data for a vehicle, medical information, vibration data, flow characteristics of a fluid or gas, measureable quantities of a chemical process, deformation, and position data.

As a non-limiting example, the device 100 can be a sensing device including active and passive radar, sonar, laser radar, acoustic flow meters, medical, and seismic devices. For these devices, the first input 110 is a sensor or a sensor array. The sensors can be acoustic transducers for sonar, optical sensors for light radar, and an antenna elements for radar. The first processor 120 can include, but is not limited to, a demodulator, decoder, digital filters, down converter, and a sampler. The first processor 120 usually forms the coefficient matrix To from a covariance matrix generated from sampled aperture data from one or more sensor arrays. The aperture data can represent information concerning a physical object, including position, velocity and the electrical characteristics of the physical object. If the array elements are equally spaced, the covariance matrix can be Hermetian, and either Toeplitz or block Toeplitz. The known vector $Y_0$ can be a steering vector, a data vector, or an arbitrary vector. The solver 130 solves the system of equations for the signal weights X which can be applied to signals $J_0$ to form signals J that produce a beam pattern. The signal weights X and the signals J also contain information concerning a target of the device 100. The second processor 140 can further process the signals J. The output 150 can be a display device for target information, or a sensor array for a radiated signal Sout.

As a non-limiting example, the device 100 can be an artificial neural network with a Toeplitz synapse matrix. The first processor 120 forms the coefficient matrix To and the vector $Y_0$ by autocorrelation and cross-correlation methods from training signals Sin applied to the input 110. These signals usually represent speech, images and data. The solver 130 calculates the vector X, which contains the synapse weights. The solver 130 applies the synapse weights X to signals $J_0$ from the second input 160 to form signals J. The signals J can be further processed by the second processor 140. This processing includes applying a nonlinear function to the signals J. The result is an output Sout to a display device 150. The signals J represent speech, images and data processed by the linear portion of the artificial neural network. The signals $J_0$ represent the input to the device 100.

As a non-limiting example, the device 100 can be a filtering device. The coefficient matrix To and the vector $Y_0$ are formed by the first processor 120 by autocorrelation and cross-correlation methods from sampled signals Sin that represent voice, images and data. The input 110 can be a hardwire connection or sensor. The solver 130 calculates the vector X, which contains filter coefficients that are applied to signals $J_0$ from the second input 160 to produce desired signals J that represent voice, images and data. The device 100 may also provide feedback to improve the match between a desired signal, and a calculated approximation to the desired signals. The signals $J_0$ can be one or more of the signals Sin.

As a non-limiting example, the device 100 can be a device that relies on linear prediction, signal estimation, or data compression methods for its operation. The first processor 120 calculates a coefficient matrix $T_0$ from an auto-correlation matrix formed from a sampled signal. The vector $Y_0$ can also be calculated from sampled signals, or it can.have all zero values except for its first element. The solver 130 calculates the vector X, which usually contains prediction coefficients used to calculate signals J from signals $J_0$. The signals J represent predicted speech, images or data. The signals J may not be calculated if the vector X is the device output. In this case, the signal J includes the vector X which represents speech, images and data.

As a non-limiting example, the device 100 can be a device that relies on system identification, system modeling, or pattern recognition methods, for its operation. The first processor 120 calculates a coefficient matrix To that is usually an autocorrelation matrix formed from a sampled signal generated by the input 110. The vector $Y_0$ is usually calculated from a cross-correlation operation from sampled signals generated by the first input 110. The solver 130 calculates a vector X containing coefficients that represent speech, images, system characteristics, or data. The solver 130 may also generate signals J. The second processor 140 further processes the vector X. This can include comparisons of the vector X with other known vectors. The output 150 can indicate the results of this comparison.

As a non-limiting example, the device 100 can be a general signal processing device for image processing, and network routing. The coefficient matrix $T_0$ can be formed from a known function. The vector $Y_0$ can be formed by the first processor from sampled signals generated by the input 110. The signals represent images and data. The solver 130 calculates a vector X which can represent an image to be further processed by the second processor 140 and displayed by the output 150.

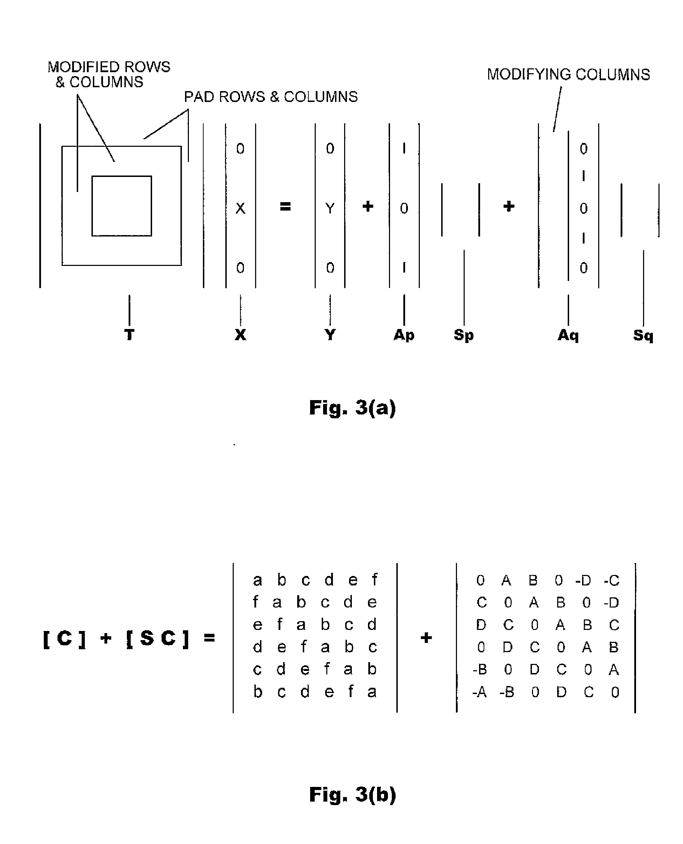

The solver 130 of Fig. 2 includes a matrix separator 131. A matrix To comprises a Toeplitz structure. The matrix separator 131 can form an extended matrix T by extending the diagonals of the matrix $T_0$ to form a matrix of greater dimensions. The matrix T comprises a Toeplitz structure. Extending a matrix $T_0$ into a matrix T introduces additional unknowns $S_p$ into the system of equations (2). Fig. 3(a).

$$T_0 \ X_0 \ = \ Y_0 \qquad\qquad (1)$$

$$T X \ = \ Y \ + \ A_p S_p \qquad\qquad (2)$$

The vectors Y and X are the vectors $Y_0$ and $X_0$ with zero pad elements. The matrix $A_p$ includes columns that only have one or two non-zero elements that correspond to pad rows. The matrix separator 131 inserts the zero values into the $Y_0$ and $X_0$ vectors. Matrix T can be factored into a sum of components comprising the product of circulant matrices $C_i$, and known diagonal matrices $D_{1i}$ and $D_{2i}$.

$$T \ = \ \Sigma \ D_{1i} \ C_i \ D_{2i} \qquad\qquad (3)$$

The elements in the principal diagonal of the matrices $D_{1i}$ and $D_{2i}$ can be given by the following recursion relationship (4). The integer n is a position on the principal diagonal. The integer s is the distance between positions on the principal diagonal. Each diagonal matrix usually has a different g(n). The recursion relationship maintains the Toeplitz form of the matrix T when the matrix T is expressed as the sum of products of diagonal matrices and a circulant matrix.

$$g(n+s) = g(n) \; g(s) \qquad\qquad (4)$$

The matrix separator 131 can determine the value of the elements in the matrices $C_i$ by solving equation (3). After the matrices $C_i$ are determined, the matrix separator 131 or the system solver 132 can calculate the transformed matrices $C_{ti}$. Exponential functions with real or imaginary arguments satisfy the recursion relationship (4). The values for the constants in the argument of the exponential functions can be arbitrarily chosen. The following are non-limiting examples of separated forms for matrix T that satisfy equation (4), or can be factored into a form that satisfies equation (4).

The diagonal matrices $D_{11}$ and $D_{22}$ of equation (5) have values on the principal diagonals that are given by an exponential function with a positive real argument. The diagonal matrices $D_{21}$ and $D_{12}$ have values on the principal diagonals that are given by an exponential function with a negative argument. The diagonal matrices $D_{11}$ and $D_{22}$ can be set equal. The diagonal matrices $D_{12}$ and $D_{21}$ can be set equal.

$$T = D_1 \, C_1 \, D_2 + D_2 \, C_2 \, D_1 \qquad\qquad (5)$$

The Fourier transform of a symmetric T is real, and the Fourier transform of a skew symmetric T is imaginary, if $D_1$ is chosen such that the Fourier transform of $D_1$ is the complex conjugate of the Fourier transform of $D_2$. This choice requires a row and column in matrix T to be padded or modified. The matrix T can also be separated into components that have matrices $D_1$ and $D_2$ that both have diagonal elements given by exponential functions with imaginary arguments as their diagonal elements. $D_1$ can be the complex conjugate of $D_2$. Other forms for a separated matrix T can be obtained by factoring the above disclosed equations. This can result in the principal diagonals of the matrices $D_{ri}$ including elements whose values are given by sine and cosine functions.

A separated matrix T can also be formed by separating the matrix T into the sum of a matrix SC and a circulant matrix C. Fig. 3(b).

$$T = C + SC$$

The value of $\sin(k \ast i)$, where i is the row index minus the column index, is then factored out from each element in the matrix SC.

$$T = C + S(\sin)$$

Two diagonal matrices are then factored out from the $S(\sin)$ matrix term using the recursion relationship (6). The value of k is arbitrary.

$$\sin(k \, i) = \sin(k \, x) \cos(k \, y) - \cos(k \, x) \sin(k \, y) \qquad\qquad (6)$$

$$T = C + [\sin(k \, x)] \, [S] \, [\cos(k \, y)] - [\cos(k \, x)] \, [S] \, [\sin(k \, y)]$$

A quotient $U_{ri}/L_{ri}$ can be substituted for each diagonal matrix $D_{ri}$. The substitution is usually approximate. The coefficient matrix T can be modified by adding modifying rows and columns to already existing rows and columns of the matrix T. Modifying the matrix T improves the match between a diagonal matrix $D_{ri}$ and the principal diagonal of a quotient $U_{ri}/L_{ri}$. Modifying a matrix T introduces additional unknowns $S_q$. The modified rows and columns of the matrix T are usually the rows and columns that are near the periphery of the matrix T. Equation (7) can be used to calculate the vector $S_q$. Matrix $A_q$ comprises modifying columns. Matrix $B_q$ comprises modifying rows. The matrix $A_q$ also comprises columns that contain all zero elements except for non zero values for elements that correspond to modified rows in the matrix T. Fig. 3(a).

$$T = T_0 + A_q S_q + A_p S_p$$

$$B_q X = S_q \qquad\qquad (7)$$

The system solver 132 of Fig. 2 forms the transformed system of equations (8). The transformed coefficient matrix $T_t$ is usually narrow banded, but can be approximately narrow banded. The sum of the products of equation (9) is usually narrow banded, but can be approximately narrow banded. The vector $Y_t$ is calculated by equation (10). The matrices $U_{1ti}$ and $U_{2ti}$ are constant, usually banded, known matrices that are stored in memory. The matrix $L_{1i}$ is usually a diagonal matrix stored in memory. The matrices $A_{qt}$ and $A_{pt}$ have few columns, and are stored in memory. The matrix [FFT] is a discrete fast Fourier transform matrix. Matrices $C_{ti}$, $U_{rti}$ and $L_{rti}$ are the FFT of matrices $C_i$, $U_{ri}$ and $L_{ri}$.

$$T_t X_t = Y_t + A_{pt} S_p + A_{qt} S_q \qquad\qquad (8)$$

$$T_t \cong \Sigma\, U_{1ti}\, C_{ti}\, U_{2ti} \qquad\qquad (9)$$

$$Y_t = [\text{FFT}]\,(\,\Pi\, L_{1i}\,)\, Y \qquad\qquad (10)$$

$$A_{pt} = [\text{FFT}]\,(\,\Pi\, L_{1i}\,)\, A_p$$

$$A_{qt} = [\text{FFT}]\,(\,\Pi\, L_{1i}\,)\, A_q$$

The matrices $U_{ri}$ and $L_{ri}$ can be determined by approximately equating a quotient $U_{ri}/L_{ri}$ to each diagonal matrix $D_{ri}$. Each quotient $U_{ri}/L_{ri}$ can also be exactly equal to a diagonal matrix $D_{ri}$. The matrices $U_{ri}$ are usually diagonal matrices. If all of the matrices $L_{1i}$ are equal, and all of the matrices $L_{2i}$ are equal, then the matrices $L_{1i}$ and $L_{2i}$ can have any form when transformed. If the matrices $L_{1i}$ are not all equal, then the matrices $L_{1i}$ are chosen such that when they are transformed they become banded or band dominant. If the matrices $L_{2i}$ are not all equal, then the matrices $L_{2i}$ are chosen such that when they are transformed, they become banded or band dominant. The transformed matrices $C_{ti}$ are diagonal or diagonally dominant matrices. The desired forms for the matrices $L_{rti}$ and $U_{rti}$ are obtained if the elements, $g_{ri}(x)$, at position x on the principal diagonals of the quotients $D_{ri}$ are approximated by equation (11). The summations are over the index m. The term ($\Pi\, L_{ri}$) is the product of matrices $L_{ri}$.

$$g_{ri}(x) \cong \frac{\Sigma\, A_{rim}\cos(w_m x) + \Sigma\, B_{rim}\sin(w_m x)}{\Sigma\, C_{rim}\cos(w_m x) + \Sigma\, D_{rim}\sin(w_m x)} \qquad\qquad (11)$$

The constants $A_{rim}$, $B_{rim}$, $C_{rim}$ and $D_{rim}$ are usually chosen so that the quotient $U_{ri}/L_{ri}$ gives the best approximation to the principal diagonals of the matrices $D_{ri}$. The matrices $U_{ri}$ and $L_{ri}$ can be modified by the addition of rows and columns either before or after they have been transformed. Modifying these matrices introduces additional unknowns to the system of equations. Elements of the matrices $D_{ri}$ that correspond to pad or modified rows and columns usually are not included in the modelling process of equation (11). Usually it is desirable to express the matrices $U_{ri}$ and $L_{ri}$ with the fewest number, and the lowest order, of terms. Application of an iterative weighted least squares algorithm can result in an error distribution between the quotients $U_{ri}/L_{ri}$, and the principal diagonals of the matrices $D_{ri}$, that has most of the error occur in a small range of values for x. This error distribution permits the rows and columns associated with this small range of values for x to be modified or padded. Pad and modified rows and columns remove the error for these rows and columns. The constants can be determined by solving a system of equations formed by partially differentiating equation (12) with respect to each of the constants. The sum of the square of the error, err, is a constant. The summations are over the index m.

$$( \; g_{ri}(x) \; (\Sigma \; D_{rim} \; \sin(w_m \; x) + \Sigma \; C_{rim} \; \cos(w_m \; x))$$

$$- \; \Sigma \; B_{rim} \; \sin(w_m \; x) + \Sigma \; A_{rim} \; \cos(w_m \; x) \; )^2 / \; B_{rp}(x) \; = \; err \qquad (12)$$

Here $B_{rp}(x)$ is constant for each iteration, and is updated for each iteration based on the values of the constants from the previous iteration. The summation is over the index m.

$$B_{rp}(x) \; = \; \Sigma \; D_{rim} \; \sin(w_m \; x) + \Sigma \; C_{rim} \; \cos(w_m \; x)$$

Other regression methods, including non-linear regression methods, can be used to determine the constants, and the desired distribution for the error. The desired error distribution can include a distribution that minimizes the magnitude of the elements that are not included within a specified bandwidth of the matrices $U_{rti}$ and $L_{rti}$. Once the constants are determined for each one of the matrices $D_{ri}$, values for the quotients $U_{ri}/L_{ri}$ are calculated for elements that correspond to pad and modified rows and columns. These calculated values are substituted for the original values in each of the matrices $D_{ri}$ that correspond to the pad and modified rows and columns. The difference between these calculated values, and the corresponding actual values, for the matrices $D_{ri}$ determine the elements of the modified, and modifying, rows and columns. These calculated values for the matrices $D_{ri}$ also determine the values for the pad rows and columns.

The system solver 132 can modify equations (8), (9) and (10) to obtain a system of equations (13) with improved solution characteristics by changing the value of elements in the matrix $T_t$. If the matrix $T_t$ is approximately band-dominant, it can be approximated with a banded approximate matrix $T_{tapp}$ by setting elements of the matrix $T_t$ that are outside selected diagonal bands to zero. A banded matrix $T_{tapp}$ can also be formed by ignoring all elements in the matrices $U_{rti}$ and $L_{rti}$ that are not in selected diagonal bands. If the matrices $C_{ti}$ have nonzero, non-principal diagonal elements, the off-principal diagonal elements may also be set to zero. The matrix $T_{tapp}$ is a banded matrix.

Equation (13) can be factored, and the rows and columns of the coefficient matrix $T_{tapp}$ can be rearranged, to obtain numerous systems of equations with improved solution characteristics. Usually, these numerous systems of equations have the same terms as equation (13), but the terms have different forms and dimensions.

If the system of equations (13) is complex, the terms of equation (13) can be multiplied out and separated into real and imaginary systems of equations. For these two systems of equations, the vectors are separated into symmetric vector components, and asymmetric vector components. The Fourier transform of a symmetric vector is a real vector. The Fourier transform of an asymmetric vector is an imaginary vector. The systems of equations can be further factored using the following relationships. These relationships apply before the matrices and vectors are transformed. The product of a symmetric Toeplitz matrix and a symmetric vector is a symmetric vector. The product of a symmetric Toeplitz matrix and an asymmetric vector is an asymmetric vector. The product of a skew symmetric Toeplitz matrix and a symmetric vector is an asymmetric vector. The product of a skew symmetric Toeplitz matrix and an asymmetric vector is a symmetric vector. Using these relationships, numerous systems of equations with vectors that comprise either symmetric or asymmetric components can be formed.

The dimensions of a transformed system of equations with symmetric and asymmetric vectors can be reduced. An N-dimensioned transformed symmetric or asymmetric vector contains (N-2)/2 duplicate elements. The duplicate elements of the transformed vectors can be removed by folding a transformed matrix back over itself, a nd adding or subtracting, corresponding elements, depending upon the transformed vector being either symmetric or asymmetric. Redundant rows of the resulting system of equations are removed. The system solver 132 solves these numerous systems of equations to determine the solution to equation (13).

As a non-limiting example, for a real system of equations (1) with a symmetric matrix To, the resulting transformed coefficient matrix $T_{tapp}$ can take the form of a real banded matrix with a band around the principal diagonal, and bands on the diagonals furthermost from the principal diagonal. Two systems of equations can be formed, one has elements from symmetric transformed vectors $X_S$ and $Y_S$, the other from asymmetric transformed vectors $X_A$ and $Y_A$. The matrix $T_{tapp}$ can be folded to eliminate duplicate elements in the transformed vectors. The result is a coefficient matrix of half dimensions with a single principal diagonal band.

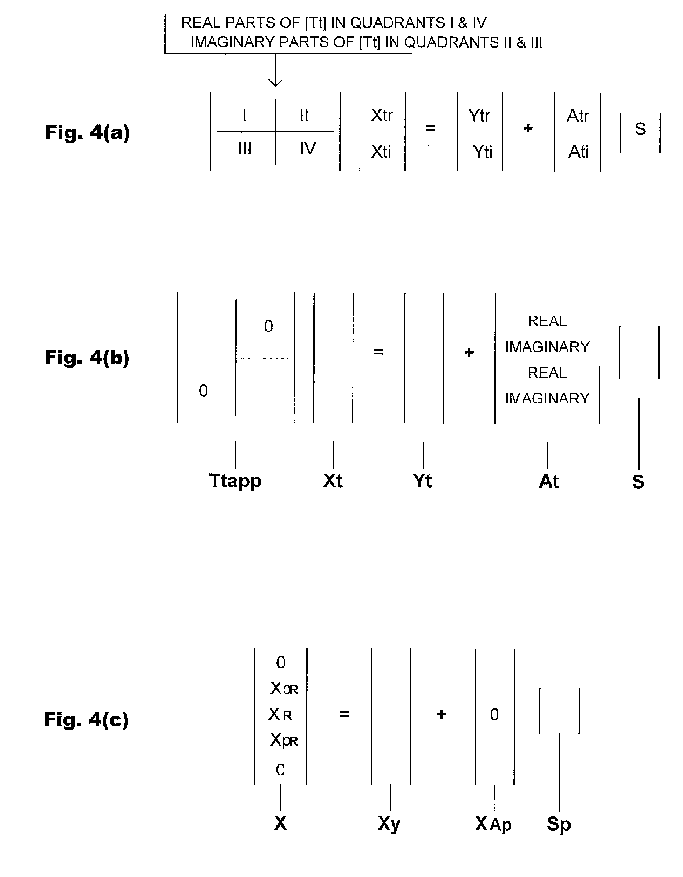

As a non-limiting example, for a complex system of equations with an Hermitian matrix $T_0$, the matrix $T_{tapp}$ can be factored into two systems of equations with the same real banded matrix having five bands, and four sub-blocks. The transformed vectors are either symmetric or asymmetric at the sub-block level. Each sub-block can have its dimensions reduced by eliminating duplicate elements in the transformed symmetric and asymmetric sub-vectors such that the matrix $T_{tapp}$ has dimensions N x N. Fig. 4(a). The five bands may be reduced to a single band by rearranging rows and columns of the matrix. In the process, the transformed vectors $X_t$ are placed in a shuffled form comprising the magnitude of real and imaginary unknowns. The complex transformed vectors $Y_t$ are placed into a shuffled form comprising the magnitude of real known values, and imaginary known values. Fig. 4(b). There are two transformed systems of equations to be solved with the same coefficient matrix.

$$T_{tapp}\, X_t = Y_t + A_{pt}\, S_p + A_{qt}\, S_q \qquad (13)$$

The system solver 132 solves the numerous systems of equations obtained from equation (13) with any methods known in the art, including any classical method including Gauss elimination, any decomposition methd including Cholesky, LDU, QR, eigenvalue and singular-value decomposition, and any iterative methods including those from the conjugate gradient family. The result is numerous transformed systems of equations having the form of equation (14) that can each be reverse-transformed to obtain numerous systems of equations (15).

$$X_t = X_{Yt} + X_{Apt}\, S_p + X_{Aqt}\, S_q \qquad (14)$$

$$X = X_Y + X_{Ap}\, S_p + X_{Aq}\, S_q \qquad (15)$$

The unknown vectors $S_p$ and $S_q$ can be determined by solving equations (16) and (17) simultaneously for each of the numerous systems of equations. The matrix Bp comprises pad rows used to form the matrix T.

$$B_q\, X = S_q$$

$$B_p\, X = S_p$$

$$(I - B_q\, X_{Aq})\, S_q = B_q\, X_Y + B_q\, X_{Ap}\, S_p \qquad (16)$$

$$(I - B_p\, X_{Ap})\, S_p = B_p\, X_Y + B_p\, X_{Aq}\, S_q \qquad (17)$$

If there are no modified rows and columns, the $S_p$ values can be calculated from the pad row portion of the vector $X_Y$ by equation (18). In general, the system solver 132 calculates $S_p$ and $S_q$, then uses equation (15) to calculate the vector X.

$$X_Y = -X_{Ap} S_p \tag{18}$$

In a non-limiting example where the matrix T has no modified rows and columns, elements of the matrix $A_p$ can be eliminated from the system of equations (2), even though their corresponding pad rows are included in the coefficient matrix T. Fig. 4(c). The matrix $A_p$ has the form of the first (p+1) and last p columns of the identity matrix. If the inverse of the coefficient matrix T, matrix $T^{-1}$, has a form such that the magnitude of the elements in the matrix $T^{-1}$ rapidly decrease the farther they are positioned from the principal diagonal, then the product of the matrix $T^{-1}$ and the matrix $A_p$ can be approximated as a banded matrix for its upper-most, and lower-most, portions. Between these upper-most and lower-most portions, there is a very small contribution to the solution vector X from the matrix $X_{Ap}$ of equation (15). The elements of the solution vector X between upper-portion rows (r+p), and lower-portion rows (n-r-p), is designated as vector $X_R$. Elements in rows 0 to (r+p), and in rows (n-r-p) to (n-1) of vector $X_R$ are zero. The nonzero elements of the vector $X_R$ are given by equation (19).

$$X_R = X_Y \tag{19}$$

A product of the matrix T and the vector $X_R$ can be computed and subtracted from the vector Y of equation (2). This vector can be used to determine the remaining unknown values of the solution vector X, vector $X_{pR}$. The matrix $T_b$ includes portions of the p to (r+p) rows and columns, and the (n-p) to (n-r-p) rows and columns of the matrix T. The vector $X_{pR}$ is the p to (r+p), and (n-p) to (n-r-p) rows, of the solution vector X. The matrix $T_b$ is approximately block Toeplitz with greatly reduced dimensions. The equations (19) and (20) can be efficiently solved by the system solver 132 after the matrices T and $T_b$ have been separated by the matrix separator 131.

$$X_{pR} = T_b^{-1} (Y - T X_R) \tag{20}$$

$$X = X_R + X_{pR} \tag{21}$$

The above-disclosed methods can be applied to a system of equations with a block Toeplitz coefficient matrix T. The vectors are block vectors. The matrix T sub-blocks $T_{ij}$ are Toeplitz, and can each be extended with pad rows and columns, and separated into a sum of matrix products by the separator 131.
The sub-blocks are modified by the addition of modifying rows and columns. Each Toeplitz sub-block and sub-vector is transformed as disclosed above. The system solver 132 factors the transformed sub-blocks of the coefficient matrix into symmetric and skew-symmetric sub-blocks. The transformed sub-vectors of the vectors X and Y are factored into two components, symmetric sub-vectors and asymmetric sub-vectors. The Fourier transform of symmetric sub-vectors are real sub-vectors. The Fourier transform of asymmetric sub-vectors are imaginary sub-vectors. The Fourier transform of a skew symmetric Toeplitz sub-block is an imaginary sub-block. The Fourier transform of a symmetric Toeplitz sub-block that has been padded or modified with a single row and column is a real sub-block. Both the transformed symmetric and the transformed asymmetric sub- vector components contain (N-2)/2 duplicate elements. The system solver 132 usually forms at least two transformed systems of equations with symmetric and asymmetric sub-vectors from the initial transformed system of equations.
If required, the system solver 132 approximates each transformed sub-block with a banded sub-block. The systems of equations is then factored and rearranged so they can be solved by any methods known in the art. The duplicate elements of the transformed sub-vectors can be removed by folding each transformed sub-block back over itself to form a sub-block that is either the sum or difference of corresponding sub-block elements. This reduces the dimensions of the transformed sub-blocks, and the transformed coefficient matrix T, from N to approximately N/2. This step usually doubles the number of systems of equations. For Toeplitz block Toeplitz matrices, these steps can be repeated to reduce the dimensions of the systems of equations again by the same amount. If there are three Toeplitz levels, the steps can be repeated a third time. The systems of equations solved by the system solver 132 usually have been rearranged to form a coefficient matrix with a single band.

A block Toeplitz matrix T has sub-blocks $T_{ij}$ with dimensions $N_s$ x $N_s$. The dimensions of matrix T are N x N. There is no limit to the number of submatrices. The matrix A of equation (22) includes modifying columns and nonzero elements corresponding to pad and modifying rows.

$$T X = Y + A S \tag{22}$$

$$T = \begin{matrix} T_{00} & T_{01} & T_{02} \\ T_{10} & T_{11} & T_{12} \\ T_{20} & T_{21} & T_{22} \end{matrix}$$

As a non-limiting example, the coefficient matrix T can be factored into the sum of the two matrix products of equation (23). The sub-blocks $C_{ijk}$ and d have dimensions $N_s$ x $N_s$. In this non-limiting example, the only nonzero sub-blocks of matrices D and D* are the sub-blocks d and d* on the principal diagonals of the matrices D and D*, respectively.

$$T = D C_1 D^* + D^* C_2 D \tag{23}$$

$$D C_1 D^* = \begin{vmatrix} d & & \\ & d & \\ & & d \end{vmatrix} \begin{vmatrix} C_{100} & C_{101} & C_{102} \\ C_{110} & C_{111} & C_{112} \\ C_{120} & C_{121} & C_{122} \end{vmatrix} \begin{vmatrix} d^* & & \\ & d^* & \\ & & d^* \end{vmatrix}$$

From the separation of equation (23), the matrix separator 131 determines the values of the elements in the sub-blocks $C_{ikj}$. This is done on a sub-block by sub-block basis. The sub-blocks d are diagonal matrices. The Fourier transform of the sub-block d is the complex conjugate of the Fourier transform of the sub-blocks d*. A quotient u/l and u*/l can be substituted for the sub-blocks d and d*, respectively. The Fourier transformed sub-blocks $u_t$ and $u_t^*$ are banded. The system solver 132 transforms the sub-vectors of vectors X and Y in equation (23).

The system solver 132 forms a block banded transformed coefficient matrix $T_{tapp}$, and transformed block system of equations (24). The block vector $Y_t$ and the block matrices $A_{pt}$ and $A_{qt}$ comprise sub-block vectors $y_{ti}$, and sub-block matrices $a_{qti}$ and $a_{pti}$, respectively. For this example, both matrix $T_{tapp}$ and matrix $T_t$ are equal, and block banded. The matrices [FFT] and [iFFT] are Fourier and inverse Fourier transform matrices, respectively. The system solver 132 solves numerous systems of equations obtained by factoring equation (24).

$$T_t = U_t C_{t1} U_t^* + U_t^* C_{t2} U_t$$

$$U_t \, C_{lt} \, U_t^* = \begin{vmatrix} u_t & & \\ & u_t & \\ & & u_t \end{vmatrix} \begin{vmatrix} C_{tl00} & C_{tl01} & C_{tl02} \\ C_{tl10} & C_{tl11} & C_{tl12} \\ C_{tl20} & C_{tl21} & C_{tl22} \end{vmatrix} \begin{vmatrix} u_t^* & & \\ & u_t^* & \\ & & u_t^* \end{vmatrix}$$

$$T_{tapp} \, X_t = Y_t + A_{pt} \, S_p + A_{qt} \, S_q \tag{24}$$

$$y_{ti} = [FFT] \, l \, y_i$$

$$a_{pti} = [FFT] \, l \, a_{pi}$$

$$a_{qti} = [FFT] \, l \, a_{qi}$$

As a non-limiting example, the system of equations is real-valued, and the coefficient matrix $T_0$ is Toeplitz block Toeplitz. For this example, the system separator 131 places pad rows and columns around each sub-block, and separates each sub-block to determine the sub-blocks $C_{ijk}$. Rows and columns of the sub- blocks of the matrix $T_0$ are modified. A transformed system of equation is calculated, and factored into two systems of equations, one with symmetric sub-vectors $X_S$ and $Y_S$, and the other with asymmetric sub-vectors $X_A$ and $Y_A$. Both of these systems of equations are reduced in dimensions while eliminating duplicate vector elements to form equations (25) and (26).

$$T_S \, X_S = Y_S + A_S \, S_S \tag{25}$$

$$T_A \, X_A = Y_A + A_A \, S_A \tag{26}$$

The rows and columns of the coefficient matrices $T_A$ and $T_S$ can be rearranged to obtain single-banded coefficient matrices comprising Toeplitz sub-blocks. The separator 131 pads and separates these Toeplitz sub-blocks. The system solver 132 separates the rearranged sub-vectors of vectors X and Y in equations (25) and (26) into symmetric and asymmetric sub-vectors. Four systems of equations are formed from equations (25) and (26), two comprising symmetric, and two comprising asymmetric, components of the rearranged vectors X and Y in equations (25) and (26). Each sub-block in the coefficient matrices of these four systems of equations is folded to reduced dimensions after the four systems of equations are transformed. If required, the rows and columns of the coefficient matrices can be rearranged to form a single-banded coefficient matrix. If the initial coefficientmatrix is block Toeplitz, the solution can be obtained by solving two systems of equations with different banded coefficient matrices of dimensions N/2 x N/2. If the initial coefficient matrix is Toeplitz block Toeplitz, the system solver 132 calculates the solution by solving four systems of equations with four different narrow banded coefficient matrices of approximate dimensions N/4 x N/4.

In general, for a complex system of equations, the terms in the system of equations can be multiplied out, and separated into a real, and an imaginary, systems of equations. These two systems of equations are further separated into two more systems of equations by separating the vectors into symmetric and asymmetric components. A system of equations of dimensions 4N x 4N can be formed from these four systems of equations.

As a non-limiting example, the coefficient matrix $T_0$ is a Hermitian Toeplitz block Toeplitz coefficient matrix in a complex system of equations. The system of equations can be factored into two systems of equations (27) and (28). The sub- blocks of matrix $T_0$ are separated and padded by the matrix separator 131. The sub-blocks are modified to obtain the coefficient matrix T in equations (27) and (28). The original system of equations is factored into a quadrant $T_{SR}$ that is the real symmetric component of the matrix $T_0$. The quadrant $T_{AI}$ is the imaginary asymmetric component of the matrix $T_0$. The subscripts A, S, R and I represent asymmetric, symmetric, real and imaginary components of the scripted vectors, respectively.

$$T\,X_{01} = Y_{01} + A_{01}\,S_{01} \qquad\qquad (27)$$

$$T = \quad T_{SR}\ \ -T_{AI}$$

$$T_{AI}\quad T_{SR}$$

The vector $Y_{01}$ comprises sub-vectors $Y_{RS}$ and $Y_{IA}$ , the vector $X_{01}$ comprises sub-vectors $X_{RS}$ and $X_{IA}$ , the vector $A_{01}$ comprises sub-vectors $A_{RS}$ and $A_{IA}$.

$$T\,X_{02} = Y_{02} + A_{02}\,S_{02} \qquad\qquad (28)$$

The vector $Y_{02}$ comprises sub-vectors $Y_{IS}$ and $-Y_{RA}$ , the vector $X_{02}$ comprises sub- vectors $X_{IS}$ and $-X_{RA}$ , the vector $A_{02}$ comprises sub-vectors $A_{IS}$ and $-A_{RA}$. The sub-blocks of the coefficient matrix T, and the sub-vectors of vectors X and Y of equatio ns (27) and (28) are transformed as disclosed above. The transformed sub- vectors of vectors X and Y are either symmetric or asymmetric. The sub-blocks of the transformed coefficient matrix T are reduced to approximately half by folding the sub-matrices to eliminate duplicate elements in the sub-vectors of the vectors X and Y. Two new systems of equations are formed with the same coefficient matrix. The rows and columns can be rearranged to form a single band if the initial coefficient matrix $T_0$ is block Toeplitz. If the initial coefficient matrix is Toeplitz block Toeplitz, the rows and columns can be rearranged within quadrants to form banded quadrants with bands comprising Toeplitz matrices as in equations (29) and (30).

$$T\,X_S = Y_S + A\,S_S \qquad\qquad (29)$$

$$T\,X_A = Y_A + A\,S_A \qquad\qquad (30)$$

The sub-vectors of the transformed and rearranged vectors X and Y of equations (29) and (30) can be separated into symmetric and asymmetric sub-vectors. Four systems of equations are transformed to produce equations comprising either symmetric or asymmetric sub-vectors. The duplicate elements of these vectors can be eliminated by folding the sub-blocks of the coefficient matrices. The rows and columns of the coefficient matrices are rearranged to form single-banded matrices. The system solver 132 solves four real systems of equations having the form of equation (13) with two different narrow-banded coefficient matrices of approximate dimensions of N/2 x N/2.

The pad rows and columns can be selected to substantially lower the condition number of the coefficient matrices so that even systems of equations with very ill-conditioned coefficient matrices can be very efficiently solved by the disclosed methods.

The system solver 132 can also form equations (19), (20) and (21) for large block Toeplitz matrices by treating each of the sub-blocks of the block Toeplitz matrix as a sta nd-alone matrix. For block Toeplitz matrices, the vectors X, $X_R$ and $X_{pR}$ are block vectors with sub-vectors. Each of the sub-vectors of the vector $X_R$ are formed from the center portion of sub-vectors of $X_Y$. The matrix $T_b$ of equation (20) is usually formed from corner portions of all of the sub-blocks of the matrix T, and is a block matrix. The elements of the sub-vectors of the vector $X_{pR}$ are zero except for the end portions of the sub-vectors of the solution vector X, excluding the rows of solution vector X corresponding to pad rows.

If the solution X is an approximate solution $X_a$, the expander 133 disclosed in Fig. 2 can update the solution vector $X_a$ to obtain a better approximation to the solution $X_0$ of equation (1). A matrix d is the matrix T minus the matrix $T_0$, where $T_0$ has been expanded to the dimensions of T with pad rows and columns. Equation (31) produces a sum of terms that are the product of the matrix $T_0$ and the inverse of the matrix T. The solution vector X includes iterative updates to the vector $X_a$.

$$X = (I - T^{-1} d + - )X_a \qquad (31)$$

The expander 133 can also obtain an update $X_u$ to the solution of equation (2) by subtracting the product of the matrix $T_0$ and the vector $X_a$ from the vector $Y_0$, and using this vector as the known vector in equation (2). The solution to equation (32) is an update to equation (2). The matrix A includes matrices $A_p$ and $A_q$.

$$T X_u = Y - T_0 X_a + A S_u \qquad (32)$$

The expander 133 can also use the solution to equation (2) as an initial solution vector estimate for other iteration techniques. Many such iteration techniques are known in the prior art, including methods from the conjugate gradient family of methods.

The system processor 134 of Fig. 2 calculates signals J from signals $J_0$ and the solution X. The calculations can comprise any mathematical operations using elements from the signals $J_0$ and the solution X known in the art including, but not limited to, summing the products of elements from the signals $J_0$ and elements from the solution X. The signals J and $J_0$ can both be a single signal, or multiple signals. If there are no signals $J_0$, the signals J comprise the solution vector X.

The disclosed methods can be used to solve a system of equations with an approximate Toeplitz or an approximate block Toeplitz coefficient matrix $T_a$. The matrix $T_a$ can be a covariance matrix. If the approximate matrix $T_a$ is sufficiently close to the matrix T, the solution from equation (2) can be used as the solution to the system of equations with the coefficient matrix $T_a$. If the matrix $T_a$ is insufficiently close to the matrix T, the solution to equation (2) can still be used to determine the solution to the system of equations with the coefficient matrix $T_a$ through the above-disclosed iterative methods used by the expander 133. There are a number of methods that can be used to approximate a matrix $T_a$ with a Toeplitz matrix $T_0$. These methods can use any statistical quantity to determine the value of the elements on a diagonal of a Toeplitz matrix from the elements on a corresponding diagonal of a matrix $T_a$. Once a Toeplitz matrix $T_0$ is calculated, a matrix T is formed, and an approximate solution is obtained as disclosed above.

The disclosed solver 130 can comprise, and the disclosed methods can be implemented on, parallel processing hardware computing architectures. Single- instruction multiple-data stream SIMD processors can calculate the vector $X_Y$ and the columns of the matrix $X_A$. A SIMD processor can also calculate the solution X from the values of the vector S. Parallel processing hardware has been disclosed in the prior art that performs: FFTs, forward and backward substitution with upper and lower banded matrices on a column vector, complex matrix multiplication that can be used to calculate $T_t$, and matrix decomposition for matrices including the coefficient matrices $T_{tapp}$.

The disclosed methods can be implemented using standard software languages. The methods can be executed on any hardware platform comprising digital circuits, including but not limited to a: general purpose microprocessor, digital signal processor, application specific integrated circuit, field programmable gate array, programmable array logic, or programmable logic array. Storage can be any suitable data carrier known in the art. The disclosed methods are very efficient when implemented on device components that comprise parallel processing architectures.

In the methods disclosed, the system of equations to be solved may be transformed into numerous systems of equations, which respectively are of correspondingly reduced dimension. In a parallel processing architecture using e.g. a plurality of general purpose microprocessors, each of the resulting numerous systems of equations may be processed on one processor. As each of the numerous systems of equations may be solved independently, this allows each processor to solve one such system of equations without requiring to obtain calculation results from other processors, thus avoiding inter-processor communication and associated overhead, such as the waiting time and time-delays involved in such inter-processor communication and the need for co-ordination of calculations, memory and local processor cache memory across such a plurality of processors. In a single processor architecture, such as e.g. using one general purpose processor or one digital signal processor, the numerous systems of equations may be processed by the processor sequentially. As each of the numerous systems of equations is of reduced dimension, processing each of the numerous systems of equations will require correspondingly less amounts of memory needed for processing, which in many cases will allow to process and solve one of the numerous systems of equations using only cache memory generally utilized by such processors. Accordingly, this avoids the need for frequent and regular access to main memory and the associated time delays involved.

Other terms with the same or similar meaning to terms used in this disclosure can be used in place of those terms used in this disclosure. Changes can be made to the form of any of the disclosed matrices including, but are not limited to, changing from diagonal matrices to diagonally dominant matrices, changing from a matrix with nonzero elements only on a principal diagonal to a matrix with nonzero elements only on non-principal diagonals, changing from a banded matrix to a band-dominant matrix, and adding rows and columns to any matrix. Any matrix can be factored into a different form by any efficient transform that separates, or forms a product with, any of the disclosed matrices. The number and arrangement of the disclosed components can be varied. The processors may be implemented as a combination of hardware and software components. The elements of the new diagonals of the matrix T can have any values.

## Claims

1. A device for calculating desired signals J, wherein said device is a component of one of a communications, sensing, imaging, control, filtering and signal processing device, said device comprising digital circuits for processing digital signals, said device further comprising:

   means for calculating matrices $C_i$ from a coefficient matrix formed from said digital signals;
   means for calculating a solution X from a transformed system of equations, said transformed system of equations comprising:

   a transformed coefficient matrix $T_{tapp}$ calculated from said matrices $C_i$; and a transformed vector $Y_t$ calculated from a vector formed
   from said digital signals; and

   means for calculating said desired signals J from said solution X, said desired signals J representing one of transmitted data, speech and images, target characteristics, an image, a control signal, and digitized information.

2. A device as recited in Claim 1, said device further comprises means for calculating: a matrix T from said digital signals; and, said matrices $C_i$ from said matrix T and diagonal matrices $D_{ri}$.

3. A device as recited in Claim 1, said device further comprising means for calculating an update to said solution X.

4. A device as recited in Claim 2, wherein said matrix T comprises pad rows and columns.

5. A device as recited in Claim 1, wherein said matrices $C_i$ and said transformed coefficient matrix $T_{tapp}$ comprise sub-blocks.

6. A device as recited in Claim 1, wherein said matrix T comprises modified rows and columns.

7. A device as recited in Claim 1, said device further comprising means for calculating a solution to a second system of equations with a block coefficient matrix $T_b$.

8. A device as recited in Claim 1, said device further comprising means for calculating said solution X by solving at least one system of equations with dimensions that are smaller than dimensions of said transformed system of equations.

9. A device as recited in Claim 1, wherein said digital circuits comprise parallel processing hardware computing architectures.

10. A method for calculating a solution X, wherein said method is implemented on a device that is a component of one of a communications, sensing, imaging, control, filtering and signal processing device, said device comprising digital circuits for processing digital signals, said method comprising the steps of:

    calculating matrices $C_i$ from a matrix calculated from said digital signals;

calculating matrices $C_{ti}$ from said matrices $C_i$;
calculating a transformed coefficient matrix $T_{tapp}$ from said matrices $C_{ti}$;
calculating a transformed vector $Y_t$ from a vector calculated from said digital signals; and
calculating said solution X from said transformed vector $Y_t$ and said transformed coefficient matrix $T_{tapp}$.

11. A method as recited in Claim 10, said method further comprises calculating desired signals J from said solution X, said desired signals J representing one of transmitted data, speech and images, target characteristics, an image, a control signal, and digitized information.

12. A method as recited in Claim 11, wherein said digital circuits comprise parallel processing hardware computing architectures.

13. A method as recited in Claim 12, wherein said step of calculating matrices $C_{ti}$ from said matrices $C_i$ comprises calculating a Fourier transform of said matrices $C_i$.

14. A computer-readable medium storing computer program instructions for
calculating desired signals J in one of a communications device, an imaging device, a sensing device, a control device, and a signal processing device, the computer program instructions defining the steps of:

calculating matrices $C_i$ from diagonal matrices $D_{ri}$ and a matrix formed from igital signals Sin;
calculating matrices $C_{ti}$ from said matrices $C_i$;
calculating a transformed coefficient matrix $T_{tapp}$ from said matrices $C_{ti}$;
calculating a transformed vector $Y_t$ from a vector formed from said digital signals Sin;
calculating a solution X from said transformed vector $Y_t$ and said ransformed coefficient matrix $T_{tapp}$; and
calculating said desired signals J from said solution X, wherein said desired signals J and said digital signals Sin represent one of transmitted data, target characteristics, an image, a control signal, and digitized information.

15. The computer-readable medium of Claim 14, wherein said computer program instructions further comprise calculating said solution X on parallel processing hardware computing architectures.

**Fig. 1   Device 100**

TO Y0

131 — MATRIX SEPARATOR

Ct Y

132 — SYSTEM SOLVER

Xa

133 — EXPANDER

X

134 — SYSTEM PROCESSOR ← J0

J

**Fig. 2   Solver 130**

**Fig. 3(a)**

$$[C] + [SC] = \begin{vmatrix} a & b & c & d & e & f \\ f & a & b & c & d & e \\ e & f & a & b & c & d \\ d & e & f & a & b & c \\ c & d & e & f & a & b \\ b & c & d & e & f & a \end{vmatrix} + \begin{vmatrix} 0 & A & B & 0 & -D & -C \\ C & 0 & A & B & 0 & -D \\ D & C & 0 & A & B & C \\ 0 & D & C & 0 & A & B \\ -B & 0 & D & C & 0 & A \\ -A & -B & 0 & D & C & 0 \end{vmatrix}$$

**Fig. 3(b)**

REAL PARTS OF [Tt] IN QUADRANTS I & IV
IMAGINARY PARTS OF [Tt] IN QUADRANTS II & III

**Fig. 4(a)**

$$\begin{vmatrix} I & II \\ \hline III & IV \end{vmatrix} \begin{vmatrix} X_{tr} \\ X_{ti} \end{vmatrix} = \begin{vmatrix} Y_{tr} \\ Y_{ti} \end{vmatrix} + \begin{vmatrix} A_{tr} \\ A_{ti} \end{vmatrix} |S|$$

**Fig. 4(b)**

$$\begin{vmatrix} & 0 \\ \hline 0 & \end{vmatrix} \begin{vmatrix} \\ \end{vmatrix} = \begin{vmatrix} \\ \end{vmatrix} + \begin{vmatrix} REAL \\ IMAGINARY \\ REAL \\ IMAGINARY \end{vmatrix} \begin{vmatrix} \\ \end{vmatrix}$$

Ttapp    Xt    Yt    At    S

**Fig. 4(c)**

$$\begin{vmatrix} 0 \\ X_{pR} \\ X_R \\ X_{pR} \\ 0 \end{vmatrix} = \begin{vmatrix} \\ \end{vmatrix} + \begin{vmatrix} 0 \end{vmatrix} \begin{vmatrix} \\ \end{vmatrix}$$

X    Xy    XAp    Sp

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12218052 B
- US 6137881 A, Oh
- US 20050123075 A, Kim
- US 20050254564 A, Tsutsui
- US 20040095994 A, Dowling
- US 5440228 A, Schmidt
- US 6448923 B, Zrnic
- US 6091361 A, Davis
- US 20060114148 A, Pillai
- US 6567034 B, Yu
- US 6044336 A, Vasilis
- US 6646593 B, Garren
- US 6438204 B, Dzakula
- US 6038197 A, Sitton
- US 20060020401 A, Davis
- US 6005916 A, Johnson
- US 20080107319 A, Chang
- US 4982162 A, Zakhor
- US 6043652 A, Liu
- US 6487524 B, Preuss
- US 5153926 A, Jansson
- US 20060039458 A1, Ding
- US 6545639 B, Barnard
- US 20050276356 A, Hui